# EUROPEAN PATENT SPECIFICATION

(11) **EP 2 554 043 B1**
(45) Date of publication and mention of the grant of the patent: **30.05.2018**
(21) Application number: 12179209.7
(22) Date of filing: 03.08.2012
(51) Int. Cl.: A01G 9/00, G09F 3/04

(54) **Method for forming a connecting slit in a plant container**
Verfahren zur Herstellung eines Verbindungsschlitzes in einem Pflanzbehälters
Procédé de formation d'une fente de liaison dans un bac à plantes

(30) Priority: 04.08.2011 NL 2007222
(43) Date of publication of application: 06.02.2013
(73) Proprietor: Desch Plantpak B.V., 5145 PC Waalwijk (NL)
(72) Inventor: Van de Voorde, Geert Kamiel Hélène, 9270 Laarne (BE)
(74) Representative: Algemeen Octrooi- en Merkenbureau B.V.

(56) References cited:
- WO-A1-97/07491
- AU-A4- 2009 100 635
- JP-A- 2002 045 046
- JP-A- 2005 204 672
- US-A1- 2007 227 067

## Description

The present invention relates to a method for forming a connecting slit in a plant container, such as a pot or a tray for plants, in which connecting slit a label comprising an information part can be detachably connected, wherein the connecting slit is mechanically formed in the plant container by means of a cutting element.

The present invention further relates to a plant container, such as a pot or a tray for plants, produced by using a method as described above. The present invention finally relates to a combination of such a plant container and a label.

A plant container provided with a connecting slit formed therein by using a method is known from JP-A-2002045046 and EP-0 799 774. The known connecting slit, which is provided in the rim of the plant container, functions to connect a label, for example carrying information about the plant present in the plant container, to the plant container. In this way, identical plant containers can be used for a large variety of plants, which plant containers can thus be produced in a standardised process, whilst individual information and instructions for the use and care of the plant to be positioned in the plant container can be simply provided by means of the labels.

A drawback of the known method for forming a connecting slit is that a punching machine is used as a cutting element.

Accordingly it is an object of the present invention to form a connecting slit in the plant container in a manner which is relatively simple, which comprises fewer production steps and which is more cost-efficient, therefore.

This object is achieved with the method according to claim 1. By forming such a connecting slit opening not having any width in a rim of the plant container, for example, using a sharp cutting element, no waste is produced, so that there is no need in the production of the plant containers to take measures for collecting and discharging the cut-out parts that are produced in the conventional production process. In this way certain operations can be left out of the production process, so that the plant containers can be produced in a more cost-efficient manner. Moreover, parts that are not present in the machine for producing a plant container provided with a connecting slit do not require maintenance, which is advantageous from a production point of view, and in particular from a maintenance point of view.

The cutting element preferably has a cutting face for forming a connecting slit having a sine shape in the plant container. The sine shape, preferably a corrugated shape, has at least two corrugations. By means of said two corrugations a label can be connected to the plant container relatively securely and locked against rotation. Instead of being corrugated, the sine shape may also be block-shaped.

Another object of the invention is to provide a plant container which can be produced in a relatively simple manner, using fewer production steps, at relatively low cost. This object is achieved with a plant container produced by using the above-described method of claim 1. As indicated, the connecting slit preferably has a corrugated shape, which corrugated shape comprises at least two corrugations. As already indicated, a label can be connected to the plant container relatively securely and locked against rotation in this manner. The fact is that it frequently happens, in particular during transport, that the labels are slightly rotated as a result of forces being exerted thereon, which may make the whole look untidy from a sales point of view, and it will therefore take man-hours to arrange the labels correctly again for sale.

It is furthermore advantageous to make the plant container of a thermo-formed material, so that the plant container will be a thermo-formed product. Thermo-forming makes it possible to produce relatively thin and consequently flexible products with a large freedom of design, and that in a cost-efficient manner. The walls of the plant container have a thickness of 0.5 - 1.5 mm, for example. The flexibility of the walls of the plant container achieved by using a thermo-forming process is in particular advantageous upon snapping a label in place in the plant container. In addition, a thermo-forming machine costs less than an injection-moulding machine.

In particular when using a thin-walled plant container produced by means of a thermal-forming process it is advantageous if the connecting slit is formed in a recessed part of the upper rim of the plant container. The fact is that the connecting slit is protected against tearing in this way, which adds to the user-friendliness of the plant container according to the present invention.

A final object of the invention is to provide a combination of a plant container and a label, wherein the label can be detachably connected to the plant container, which plant container can be produced in a relatively simple manner, using fewer production steps, at relatively low cost. This object is achieved with a plant container as described above in combination with a label having an information part, which projects above the plant container in the connected condition, an insertion part, which is inserted into the plant container through the connecting slit in the connected condition, and a connecting part between said information part and said insertion part, which is detachably connected in the connecting slit in the connected condition.

Preferably, the circumferential edge of the connecting slit is configured so that parts thereof, more in particular the at least two corrugations already described above, pass through at least one hole provided in the connecting part, more in particular through the at least two holes provided in the connecting part of the label, in the connected condition.

The method, the plant container and the combination of plant container and label according to the invention will now be explained with reference to an embodiment shown in the appended figures.
Figure 1 is a schematic view of an upper part of a plant container according to the present invention.
Figure 2 shows a combination according to the present invention of the plant container shown in figure 1 and a label.

Like numerals in the two figures indicate like parts.

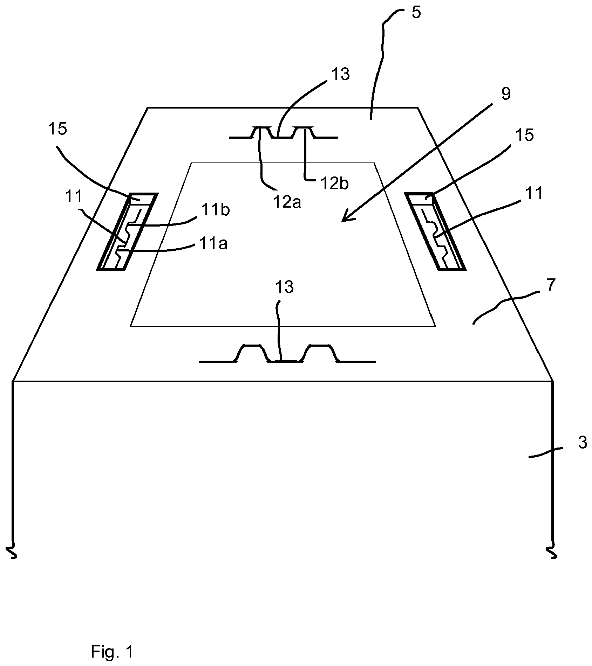

Figure 1 shows a rectangular plant container according to the present invention in the form of a flower pot, which has been produced by using the method according to the present invention. Although a rectangular plant container is shown in the figures, it is possible, of course, to use the inventive concept described herein with differently configured plant containers. The flower pot 1 comprises side walls 3, 5, only two of which are shown in figure 1, as well as a rim 7 that extends substantially transversely to the side walls 3, 5. The rim 7 defines an opening 9 to the interior of the flower pot 1. Via the opening 9 a plant (not shown) can be positioned, possibly with potting compost or the like, in the flower pot 1.

The rim 7 can be supported by means of flanges (not shown) attached to the inner side of the side walls 3, 5, so that the rim 7 will normally extend horizontally with respect to vertically extending side walls 3, 5. In the illustrated embodiment, the rim 7 is provided with a first pair of opposite connecting slits 11 as well as with a second pair of opposite connecting slits 13. Each connecting slit 11 of the first pair is located in a bottom portion of a recessed part of the rim, or, in other words, a notch 15. The connecting slits 13 and the notches 15 are configured identically; the same applies to the connecting slits 13. Although the connecting slits 11, 13 are provided in pairs in the illustrated flower pot 1, it is possible to use only one connecting slit 11, 13 in a plant container. It is even possible to use only a single connecting slit 11 located in the notch 15 or only a single connecting slit 13 in the rim 7 of a plant container.

The connecting slits 11, 13 have been formed in the rim 7 of the flower pot 1 by using the method according to the present invention, with circumferential edges of the connecting slit 11, 13 abutting against each other after the slit has been formed by means of a cutting element (not shown), so that a connecting slit opening not having any width is provided in the flower pot 1. The sine shape of each connecting slit 11, 13 comprises at least two corrugations 11a, 11b; 12a, 12b.

Using the method according to the present invention, a connecting slit opening not having any width is thus provided, as a result of which no waste is produced in the production process of the connecting slits 11, 13, so that no measures for collecting and discharging the cut-out parts that are normally produced in the conventional process need to be taken in the production of the plant containers. In this way certain operations can be left out of the production process, making it possible to produce the plant containers at lower cost.

Moreover, as shown in figure 1 several connecting slits may be formed in a flower pot 1, only some of which need to be used in practice, without the presence of the non-used connecting slits resulting in the presence of holes in the rim 7, thereby making a flower pot 1 look more attractive.

The flower pot 1 is preferably produced by using a thermo-forming process, providing a relatively flexible flower pot 1 having thin side walls 3, 5 and a thin rim (0.5 - 1.5 mm) 7. To protect a connecting slit 11 in such a thin wall 7, notches 15 are formed during the thermo-forming process, so that the connecting slits 11 are protected against tearing.

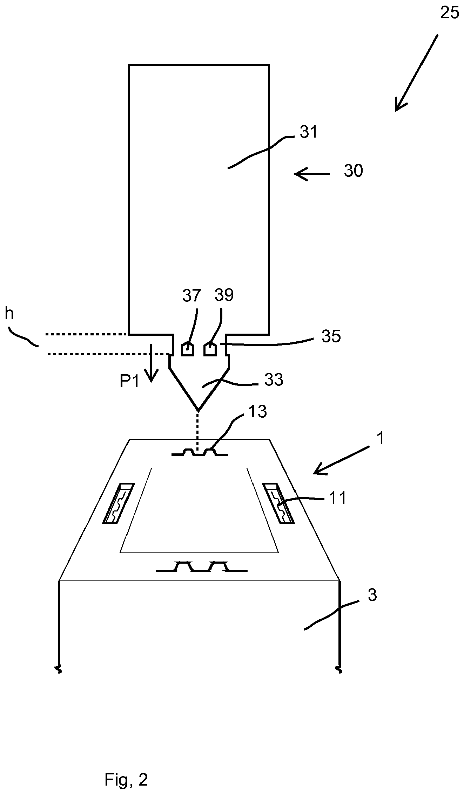

Figure 2 shows a combination 25 according to the present invention of a plant container 1 and a label 30. The label 30 can be detachably connected to the flower pot 1 in the connecting slit 11 or in the connecting slit 13. As is illustrated in dotted lines, the label can be moved in the direction indicated by arrow P1 to within the connecting slit 13. The flower pot 1 shown in figure 2 is identical to the flower pot 1 shown in figure 2.

The label 30 has an information part 31, which projects above he flower pot 1 in the connected condition in the connecting slit, on which information part product information and/or instructions for the use and care (not shown) of a plant positioned in the flower pot 1 may be printed. The label 30 further has an insertion part 33, which passes through the connecting slit 13 in the flower pot in the connected condition, as well as a connecting part present between the information part 31 and the insertion part 33. In the connected condition, the connecting part 35 has a height h, which is illustrated in dotted lines in figure 2. In the connected condition, the connecting part 35 is detachably connected to the connecting slit 13. The connecting part 35 comprises two holes 37, 39 to make said connection possible. The holes 37, 39 are identical to each other, their configuration corresponding to or in any case being adapted to the configuration of the corrugations 11a, 11b; 12a, 12b of the connecting slits 11, 13. The holes 37, 39 extend from the boundary plane between the connecting part 35 and the insertion part 33 in the direction of the information part 31. The height of each hole 37, 39 is preferably greater than half the height h of the connecting part 35, but smaller than the height h of the connecting part. When holes thus configured are used, the corrugations 11a, 11b; 12a, 12b will be securely snapped in place in the holes 37, 39. To remove the label 30, the material of the flower pot 1 is deformed near the connecting slit 11, 13, whereupon the corrugations come to abut against the insertion part and the label 30 can be removed from the flower pot 1 in a relatively simple manner. Upon insertion, the corrugations 11a, 11b; 12a, 12b slide over the insertion part and snap in place into the holes 37, 39.

Although a sine-shaped connecting slit provided with corrugations is shown in the figures, it is also possible to use blocks (not shown) instead of corrugations, in which case the holes in the connecting part will be configured to correspond to the blocks.

## Claims

1. A method for forming a connecting slit (11, 13) in a plant container (1), such as a pot or a tray for plants, in which connecting slit (11, 13) a label (30) comprising an information part (31) can be detachably connected, wherein the connecting slit (11. 13) is mechanically formed in the plant container (1) by means of a cutting element, the connecting slit (11, 13) being formed in the plant container by means of the cutting element in such a manner that circumferential edges of the connecting slit (11, 13) abut against each other after the cutting operation, so that a connecting slit opening not having any width is provided in the plant container, **characterised in that** the cutting element has a cutting face for forming a connecting slit (11, 13) having a sine shape in the plant container (1).

2. A plant container (1), such as a pot or a tray for plants, produced by using a method according to either one of the preceding claims, so that the plant container (1) comprises a connecting slit (11, 13) whose circumferential edges abut against each other, so that a connecting slit opening not having any width is provided, **characterised in that** the connecting slit comprises a sine shape.

3. A plant container according to claim 2, **characterised in that** said sine shape comprises at least two corrugations or at least two blocks.

4. A plant container according to any one of claims 2 or 3, **characterised in that** the plant container is a thermo-formed product.

5. A plant container according to any one of claims 2, 3 or 4, **characterised in that** the connecting slit is provided in a recessed part of the upper rim of the plant container.

6. A combination of a plant container (1) according to any one of claims 2-5 and at least one label (30), wherein the label (30) can be detachably connected to the plant-container (1), wherein the label (30) has an information part (31), which projects above the plant container in the connected condition, an insertion part (33), which is inserted into the plant container (1) through the connecting slit (11, 13) in the connected condition, and a connecting part (35) between said information part (31) and said insertion part (33), which is detachably connected in the connecting slit in the connected condition.

7. A combination according to claim 6, wherein the circumferential edge of the connecting slit is configured so that parts thereof pass through at least one hole provided in the connecting part in the connected condition.

8. A combination according to claim 7, **characterised in that** said parts comprise at least two corrugations or blocks, and that the label comprises at least two holes located side by side in the connecting part, so that each corrugation or block passes through a separate hole in the connected condition.

## Patentansprüche

1. Ein Verfahren zur Herstellung eines Verbindungsschlitzes (11, 13) in einem Pflanzenbehälter (1) wie einem Topf oder Tablett für Pflanzen, wobei in dem Verbindungsschlitz (11, 13) ein einen Informationsteil (31) enthaltendes Schild (30) lösbar befestigt sein kann, wobei der Verbindungsschlitz (11, 13) durch ein Schneidelement in dem Pflanzenbehälter (1) mechanisch gebildet wurde und der Verbindungsschlitz (11, 13) durch das Schneidelement derart in dem Pflanzenbehälter gebildet wurde, dass die Umfangskanten des Verbindungsschlitzes (11, 13) nach dem Schneidvorgang derart aneinander anstoßen, dass eine Verbindungsschlitzöffnung, die keine Breite hat, in dem Pflanzenbehälter angebracht worden ist, **dadurch gekennzeichnet, dass** das Schneidelement eine Schneidfläche für das Bilden eines sinusförmigen Verbindungsschlitzes (11, 13) mit einer Sinusform in dem Pflanzenbehälter (1) besitzt.

2. Ein Pflanzenbehälter (1) wie ein Topf oder Tablett für Pflanzen, der durch die Verwendung eines Verfahrens nach einem der vorhergehenden Ansprüche hergestellt worden ist, so dass der Pflanzenbehälter (1) einen Verbindungsschlitz (11, 13) umfasst, dessen Umfangskanten derart aneinander anstoßen, dass eine Verbindungsschlitzöffnung, die keine Breite hat, bereitgestellt wird, **dadurch gekennzeichnet, dass** der Verbindungsschlitz eine Sinusform umfasst.

3. Ein Pflanzenbehälter nach Anspruch 2, **dadurch gekennzeichnet, dass** die Sinusform mindestens zwei Wellungen oder mindestens zwei Blöcke umfasst.

4. Ein Pflanzenbehälter nach Anspruch 2 oder 3, **dadurch gekennzeichnet, dass** der Pflanzenbehälter ein thermogeformtes Erzeugnis ist.

5. Ein Pflanzenbehälter nach einem der Ansprüche 2, 3 oder 4, **dadurch gekennzeichnet, dass** der Verbindungsschlitz in einem vertieften Teil des oberen Randes des Pflanzenbehälters angebracht ist.

6. Eine Kombination aus einem Pflanzenbehälter (1) nach einem der Ansprüche 2 bis 5 und mindestens einem Schild (30), wobei das Schild (30) mit dem Pflanzenbehälter (1) lösbar verbunden sein kann, wobei das Schild (30) einen im verbundenen Zustand über den Pflanzenbehälter hervorragenden Informationsteil (31), einen Steckteil (33), der im verbundenen Zustand durch den Verbindungsschlitz (11, 13) in den Pflanzenbehälter (1) gesteckt ist, und einen Verbindungsteil (35) zwischen diesem Informationsteil (31) und dem Steckteil (33), der im verbundenen Zustand in dem Verbindungsschlitz lösbar befestigt ist, aufweist.

7. Eine Kombination nach Anspruch 6, wobei die Umfangskante des Verbindungsschlitzes so gestaltet ist, dass im verbundenen Zustand Teile davon durch mindestens eine in dem Verbindungsteil angebrachte Öffnung hindurchgehen.

8. Eine Kombination nach Anspruch 7, **dadurch gekennzeichnet, dass** die Teile mindestens zwei Wellungen oder Blöcke umfassen und dass das Schild mindestens zwei Öffnungen umfasst, die in dem Verbindungsteil nebeneinander angeordnet sind, so dass im verbundenen Zustand jede Wellung oder Block durch eine separate Öffnung hindurchgeht.

## Revendications

1. Procédé pour former une fente de liaison (11, 13) dans un bac à plantes (1), tel qu'un pot ou un plateau pour plantes, dans cette fente de liaison (11, 13), une étiquette (30) comprenant une partie d'information (31) peut être reliée de manière amovible, où la fente de liaison (11, 13) est mécaniquement formée dans le bac à plantes (1) au moyen d'un élément de coupe, la fente de liaison (11, 13) étant formée dans le bac à plantes au moyen de l'élément de coupe de manière à ce que des bords circonférentiels de la fente de liaison (11, 13) viennent en butée l'un contre l'autre après l'opération de coupe, de sorte qu'une ouverture en fente de liaison n'ayant pas de largeur soit prévue dans le bac à plantes, **caractérisé en ce que** l'élément de coupe a une face de coupe pour former une fente de liaison (11, 13) ayant une forme sinusoïdale dans le bac à plantes (1).

2. Bac à plantes (1), tel qu'un pot ou un plateau pour plantes, produit en utilisant un procédé selon l'une des revendications précédentes, de sorte que le bac à plantes (1) comprenne une fente de liaison (11, 13) dont les bords circonférentiels viennent en butée l'un contre l'autre, de sorte qu'une ouverture en fente de liaison n'ayant pas de largeur soit prévue, **caractérisé en ce que** la fente de liaison présente une forme sinusoïdale.

3. Bac à plantes selon la revendication 2, **caractérisé en ce que** ladite forme sinusoïdale comprend au moins deux ondulations ou au moins deux blocs.

4. Bac à plantes selon l'une quelconque des revendications 2 et 3, **caractérisé en ce que** le bac à plantes est un produit thermoformé.

5. Bac à plantes selon l'une quelconque des revendications 2, 3 et 4, **caractérisé en ce que** la fente de liaison est prévue dans une partie en évidement du rebord supérieur du bac à plantes.

6. Combinaison d'un bac à plantes (1) selon l'une quelconque des revendications 2 à 5 et d'au moins une étiquette (30), dans laquelle l'étiquette (30) peut être reliée de manière amovible au bac à plantes (1), où l'étiquette (30) a une partie d'information (31), qui fait saillie au-dessus du bac à plantes à l'état relié, une partie d'insertion (33), qui est insérée dans le bac à plantes (1) à travers la fente de liaison (11, 13) à l'état relié, et une partie de liaison (35) entre ladite partie d'information (31) et ladite partie d'insertion (33), qui est reliée de manière amovible dans la fente de liaison à l'état relié.

7. Combinaison selon la revendication 6, dans laquelle le bord circonférentiel de la fente de liaison est configuré de sorte que des parties de celui-ci passent à travers au moins un trou prévu dans la partie de liaison à l'état relié.

8. Combinaison selon la revendication 7, **caractérisée en ce que** lesdites parties comprennent au moins deux ondulations ou blocs, et **en ce que** l'étiquette comprend au moins deux trous situés côte à côte dans la partie de liaison, de sorte que chaque ondulation ou bloc passe à travers un trou séparé à l'état relié.
